# EUROPEAN PATENT SPECIFICATION

(11) **EP 2 014 482 B1**
(45) Date of publication and mention of the grant of the patent: **08.01.2014**
(21) Application number: 08010536.4
(22) Date of filing: 10.06.2008
(51) Int. Cl.: B43K 8/02, B43K 8/04, B43K 8/18, B43K 5/18, B43K 7/08, B43K 7/10

(54) **Direct liquid-writing instrument**
Direktes Flüssigkeitsschreibinstrument
Instrument d'écriture liquide directe

(30) Priority: 11.06.2007 JP 2007153700
(43) Date of publication of application: 14.01.2009
(73) Proprietor: Daicel Polymer Ltd., Tokyo 108-8231 (JP); Micro Co., Ltd., Tokyo (JP)
(72) Inventor: Shima, Takehiko, Tokyo (JP); Itakura, Masahiko, Tokyo 108-8231 (JP); Sasaki, Hiromoto, Tokyo 108-8231 (JP)
(74) Representative: Grünecker, Kinkeldey, Stockmair & Schwanhäusser

(56) References cited:
- EP-A- 1 607 238
- DE-A1- 19 904 706
- JP-A- 8 164 694
- JP-A- 2003 266 986
- JP-A- 2004 224 011

## Description

### Technical Field

The present invention relates to a resin composition used for direct liquid-writing instruments such as ballpoint pen and fountain pen, and also to a direct liquid-writing instrument using the same.

### Background Art

Direct liquid-writing instruments such as ballpoint pen and fountain pen using a water-ink have, as a component, an ink-retaining part in a bellows-like shape made of a thermoplastic resin such as ABS resin. The ink-retaining part is required to have a good wettability of ink. If the wettability is poor, ink-leakage occurs from pen-tip during use, which raises problems of getting users' hands dirty or of soiling papers.

JP-A 8-156481 discloses a method for forming a thin film of surfactant or of hydrophilic substance on the surface of the ink-retaining member 2, a method for forming irregular profile on the surface of the ink-retaining member 2 caused by etching treatment, deposits, and the like, and other method.

JP-A 9-315079 discloses an etching treatment for improving the wettability of resin part (a pen core 14 including the ink-retaining portion 14b) of the direct liquid-writing instrument, using an etching liquid composed of sulfuric acid as the base compound, and further of chromic anhydride and phosphoric acid. As described also in JP-A 9-315079, however, the etching liquid has a problem of strong toxicity.

JP-A 11-268470 discloses a method for applying chemical treatment using an acid such as hydrochloric acid, nitric acid, or chromic acid mixture, and using an alkali, and the like for improving wettability of resin part (such as collector (ink-retaining body) 2b which is an adjustor for adjusting the internal pressure of the writing instrument using a plurality of blade-shaped grooves) of the direct liquid-writing instrument.

JP-A 2005-88289 shows a direct liquid-writing instrument having a ink-retaining part formed by a thermoplastic resin having a permanent antistatic, but is not sufficient in prevention of ink-leakage.

JP-A- 2004-224011 discloses a writing instrument with an ink-follower, a part of which comprises at least two kinds of different thermoplastic resins.

### Disclosure of the Invention

The invention provides a resin composition for a part contacting with a water-ink in a direct liquid-writing instrument. With the resin composition, a direct liquid-writing instrument can be manufactured, being free from ink-leakage from a pen-tip even after a long use, without applying etching treatment by a toxic chromic acid or applying other modification treatments.

The invention then provides a direct liquid-writing instrument free from ink-leakage from pen-tip even after a long use, without applying etching treatment by a toxic chromic acid or applying other modification treatment.

The present invention provides a resin composition for a part contacting with a water-ink in a direct liquid-writing instrument, the composition containing: 20 to 95% by mass of (A) a polyamide-based resin; and 80 to 5% by mass of (B) at least one resin selected from a styrene-based resin, an olefin-based resin and a polyphenylene ether resin.

The present invention provides a direct liquid-writing instrument using a water-ink, wherein a part contacting with the water-ink in the direct liquid-writing instrument contains a resin composition containing: 20 to 95% by mass of (A) a polyamide-based resin; and 80 to 5% by mass of (B) at least one resin selected from a styrene-based resin, an olefin-based resin, and a polyphenylene ether resin, wherein the part contacting with said water-ink is an ink-retaining part in a bellows-like shape.

The present invention provides a direct liquid-writing instrument having a ink-retaining part wherein a ink is retained and a pen-tip, at least a part or surface contacting with a water-ink of the ink-retaining part containing (A) 20 to 95% by mass of a polyamide-based resin and 80 to 5% by mass of (B) at least one resin selected from a styrene-based resin, an olefin-based resin and a polyphenylene ether resin.

The present invention provides a direct liquid-writing instrument, as shown above, in which a water-ink is retained in the ink-retaining part.

The present invention provides use of the above-mentioned resin composition for a part contacting with a water-ink in a direct liquid-writing instrument.

The direct liquid-writing instrument of the invention can be used with ink flowing from the ink retainer directly to, for example, paper.

### Brief Description of the Drawings

Figure 1 shows front view of the ink-retaining part in a bellows-like shape, made of the resin composition of the present invention.
Figure 2 shows a part-cross sectional view (in the axial direction) of the direct liquid-writing instrument according to the present invention.

In the Figures, numerical reference 1 means the ink-retaining part and 10 means the ballpoint pen using a water-ink (direct liquid-writing instrument).

### Detailed Description of the Invention

The resin composition according to the present invention provides good wettability of a molded article being manufactured therefrom. As a result, the part contacting with a water-ink, manufactured from the resin composition (an ink-retaining part in a bellows-like shape), has improved wettability without applying wettability-improving treatment such as etching treatment which is adopted in conventional technologies. Consequently, the direct liquid-writing instrument having the part does not need the wettability-improving treatment such as etching treatment during the manufacturing process, and the occurrence of ink-leakage from pen-tip is significantly suppressed even after a long period of use.

### <Resin composition for a part contacting with a water-ink, in a direct liquid-writing instrument>

The resin composition according to the present invention is used for the part contacting with water-ink in the direct liquid-writing instrument. The resin composition of the present invention is at least for an ink-retaining part in a bellows-like shape.

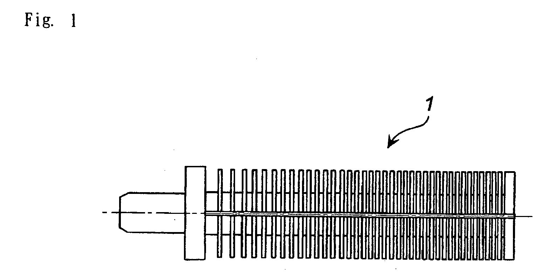

The "ink-retaining part in a bellows-like shape" which is manufactured from the resin composition of the present invention is a known part in direct liquid-writing instruments using a water-ink. The "ink-retaining part in a bellows-like shape" is, for example, an ink-retaining part 1 shown in Fig. 1, and which is the same as the "ink-retaining member 2" in JP-A 8-156481, the "ink-retaining portion 14b" in JP-A 9-315079, and the "collector (ink-retaining body) 2b" in JP-A 11-268470.

### ((A) component)

Examples of the polyamide-based resin of the component (A) are: nylon 66, polyhexamethylene sebacanamide (nylon 6.10), polyhexamethylene dodecanamide (nylon 6.12), polydodecamethylene dodecanamide (nylon 1212), polymethaxylylene adipamide (nylon MXD6), polytetramethylene adipamide (nylon 46), and a mixture or a copolymer of them; a copolymer such as nylon 6/66, nylon 66/6T (6T:polyhexamethylene terephthalamide) having 50% by mole or less of 6T component, nylon 66/61 (6I:polyhexamethylene isophthalamide) having 50% or less of 61 component, nylon 6T/6I/66, or nylon 6T/6I/610; and a copolymer such as polyhexamethylene terephthalamide (nylon 6T), polyhexamethylene isophtalamide (nylon 61), poly(2-methylpentamethylene)terephthalamide (nylon M5T), poly(2-methylpentamethylene)isophthalamide (nylon M5I), nylon 6T/6I, or nylon 6T/M5T. Other than above, there are applicable a copolymerized nylon such as amorphous nylon. The amorphous nylon includes a polycondensate of terephthalic acid and trimethylhexamethylene diamine.

Furthermore, there are applicable a ring-opened polymer of cyclic lactam, a polycondensate of aminocarboxylic acid, and a copolymer of these components, specifically an aliphatic polyamide resin such as nylon 6, poly-ω-undecanamide (nylon 11), or poly-ω-dodecanamide (nylon 12), and a copolymer of them, a copolymer with a polyamide composed of diamine and dicarboxylic acid, specifically nylon 6T/6, nylon 6T/11, nylon 6T/12, nylon 6T/6I/12, nylon 6T/6I/610/12, and the like, and a mixture of them.

As for the polyamide-based resin, PA (nylon) 6, PA (nylon) 66, and PA (nylon) 6/66 are preferred in the above group.

### ((B) component)

The (B) component is at least one resin selected from the group consisting of a styrene-based resin, an olefin-based resin, and a polyphenylene ether resin.

Applicable styrene-based resin includes a polymer of styrene and styrene-derivatives such as α-substituted styrene and a nucleus-substituted styrene. Also there are included a copolymer composed of above monomers as the main components and of a monomer of vinyl compound such as acrylonitrile, acrylic acid, and methacrylic acid and/or of a monomer of conjugated diene such as butadiene and isoprene. Examples of them are polystyrene, high-impact polystyrene (HIPS) resin, acrylonitrile-butadiene-styrene copolymer (ABS) resin, acrylonitrile-styrene copolymer (AS resin), styrene-methacrylate copolymer (MS resin), and styrene-butadiene copolymer (SBS resin).

The polystyrene-based resin may contain a styrene-based copolymer prepared by copolymerization with a carboxyl group-containing unsaturated compound to improve the compatibility and the reactivity with the polyamide-based resin. The styrene-based copolymer prepared by copolymerization with a carboxyl group-containing unsaturated compound is a copolymer prepared by polymerization of a carboxyl group-containing unsaturated compound and, if needed, other monomer copolymerizable therewith in the presence of a rubber-like polymer.

Examples of the components are the following:
(1) A graft polymer prepared by polymerization of a monomer containing an aromatic vinyl monomer as the essential component, or a monomer containing an aromatic vinyl compound and a carboxyl group-containing unsaturated compound as the essential components, in the presence of a rubber-like polymer prepared by copolymerization of a carboxyl group-containing unsaturated compound;
(2) A graft copolymer prepared by copolymerization of a monomer containing an aromatic vinyl compound and a carboxyl group-containing unsaturated compound as the essential components, in the presence of a rubber-like polymer;
(3) A mixture of rubber-reinforced styrene-based resin, in which the carboxyl group-containing unsaturated compound is not copolymerized, and a copolymer composed of monomer containing a carboxyl group-containing unsaturated compound and an aromatic vinyl compound as the essential components;
(4) A mixture of the above (1), (2) and a copolymer containing a carboxyl group-containing unsaturated compound and an aromatic vinyl compound as the essential components; and
(5) A mixture of the above (1) to (4), and a copolymer containing an aromatic vinyl compound as the essential components.

As of above (1) to (5), the aromatic vinyl compound is preferably styrene, and the monomer copolymerizing with the aromatic vinyl compound prefers acrylonitrile.

The content of the carboxyl group-containing unsaturated compound in the styrene-based resin is preferably within a range of 10 to 50% by mass.

The olefin-based resin is a polymer containing mono-olefin of carbon numbers 2 to 8 as the major monomer component. Examples of the olefin-based resin are low-densitypolyethylene, high-density polyethylene, linear low-density polyethylene, polypropylene, ethylene-propylene random copolymer, ethylene-propylene block copolymer, polymethylpentene, polybutene-1, and one or more of modified compounds or the like of them.

### ((C) component)

In addition to the above components (A) and (B), the resin composition according to the present invention may further contain a polymer having maleimide-based monomer unit of the component (C) as the component functioning as a compatibilization agent for these resins. The polymer having maleimide-based monomer unit of the component (C) may be a polymer having maleimide-based monomer unit or may be a copolymer of maleimide-based monomer unit and other monomer unit.

Preferred maleimide-based monomer as the maleimide-based monomer unit are one or more of compound selected from maleimide, N-methyl maleimide, N-ethyl maleimide, N-propyl maleimide, N-isopropyl maleimide, N-cyclohexyl maleimide, N-phenyl maleimide, N-toluyl maleimide, N-xylyl maleimide, N-naphthyl maleimide, N-t-butyl maleimide, N-ortochlorophenyl maleimide, and N-orthomethoxyphenyl maleimide.

The monomer having other monomer units includes: aromatic vinyl-based compounds such as styrene, α-methyl styrene, vinyl ketone, or t-butyl styrene; and unsaturated dicaroboxylic acid anhydrides such as maleic anhydride, methyl maleic anhydride, 1,2-dimethyl maleic anhydride, ethyl maleic anhydride, or phenyl maleic anhydride.

The polymer having a maleimide-based monomer unit prefers a copolymer composed of a maleimide-based monomer, an aromatic vinyl monomer, and an unsaturated dicarboxylic acid anhydride monomer. When these three kinds of monomers are combined, the mixing ratio is preferably within a range given below.

The content of the maleimide-based monomer unit is preferably within a range of 10 to 80% by mass, more preferably 30 to 60% by mass, and most preferably 40 to 55% by mass. The content of the aromatic vinyl-based monomer unit is preferably within a range of 10 to 80% by mass, more preferably 30 to 60% by mass, and most preferably 40 to 55% by mass. The content of the unsaturated dicarboxylic acid anhydride monomer unit is preferably within a range of 0.1 to 10% by mass, more preferably 0.5 to 5% by mass, and most preferably 0.5 to 3% by mass.

When, as the component (B), a styrene-based copolymer prepared by copolymerization of a carboxyl group-containing unsaturated compound is adopted to improve the compatibility and the reactivity with the polyamide-based resin, the component (C) may be used in combination with the styrene-based copolymer or may be used instead of the styrene-based copolymer.

In the resin composition according to the present invention, the content of the component(A) is within a range of 20 to 95% by mass, preferably 40 to 90% by mass, more preferably 45 to 80% by mass, and most preferably 50 to 75% by mass, and the content of the component (B) is within a range of 80 to 5% by mass, preferably 60 to 10% by mass, more preferably 55 to 20% by mass, and most preferably 50 to 25% by mass.

When the resin composition according to the present invention further contains a polymer having the maleimide-based monomer unit of the component(C), the content of the component (C) is preferably within a range of 1 to 50 parts by mass to 100 parts by mass of the sum of components (A) and (B), more preferably 3 to 30 parts by mass, and most preferably 5 to 15 parts by mass.

The resin composition according to the present invention can further contain varieties of publicly known additives other than the above components (A), (B) and (C), within the range of being able to solve the above issues. Publicly known additives include plasticizer, heat or light stabilizer, processing aid, antioxidant, coloring matter such as pigment, fibrous or powdery filler, and the like.

### <Direct liquid-writing instrument>

The direct liquid-writing instrument according to the present invention has a part, made of the above-described resin composition, contacting with a water-ink. To solve the issues of the present invention, the part is at least the above-described ink-retaining part in a bellows-like shape.

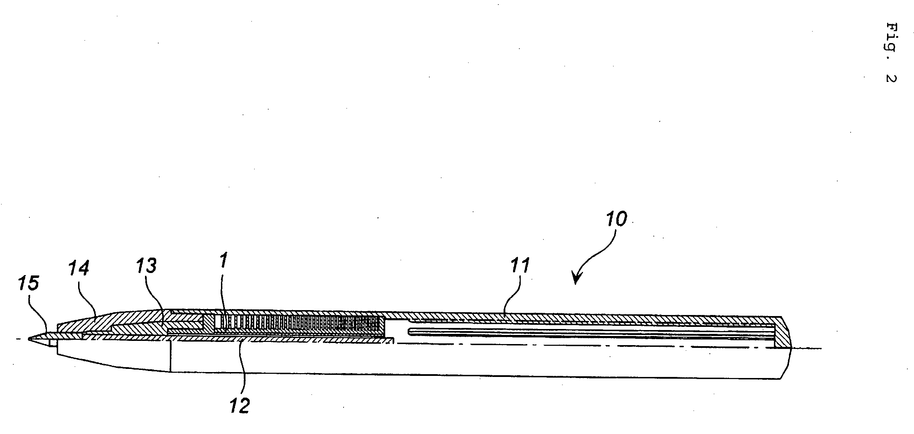

The direct liquid-writing instrument according to the present invention can be, for example, a ballpoint pen 10 shown in Fig. 2. The ink-retaining part 1 of the present invention is incorporated in a main body 11 of the ballpoint pen 10. The reference number 12 indicates inner cotton, the number 13 indicates joint part, the number 14 indicates taper part, and the number 15 indicates tip. The water-ink is contained in contact with the ink-retaining part 1.

The liquid-flow-type writing instrument according to the present invention uses a water-ink or an aqueous ink. The water-ink includes water and a dye or pigment. It may further include a surfactant. The used ink may be black or in color.

A preferred surface tension of the water-ink is in a range from 30 to 50 dyne/cm. Around 40 dyne/cm is more preferred. One example of commercially available blue inks has a surface tension of 34.3 mN/m or 34.3 dyne/cm. One example of commercially available black inks has a surface tension of 38.6 mN/m or 38.6 dyne/cm.

The water-ink having a preferable surface tension has a good wettability to an ink-retaining part, and makes it possible to make a clear record with a dried ink without running to a record material such as a paper.

The above-mentioned water-ink having a preferable surface tension has a good wettability to the ink-retaining part obtained from the resin composition of the present invention. Accordingly, in the present invention, the wettabilty can be improved without applying any wettability-improving treatment such as etching treatment which is adopted in conventional technologies.

The water-ink of the present invention may include a small amount of an organic solvent mainly for adjusting the surface tension.

The water-ink used in the direct liquid-writing instrument according to the present invention may be a known one. It may contain water as the base component, a coloring-matter and optionally other components. In general, it has a surface tension of around 40 dyn/cm as above shown.

As the coloring matter, a dye such as an acidic dye, a direct dye or a basic dye, an organic pigment such as an azo pigment, a nitroso pigment, a nitro pigment, a basic dye pigment, an acidic dye pigment, a vat dye pigment, a mordant color pigment or a natural dye pigment, ocher, barium yellow, iron blue, barium sulfate, titanium oxide, red oxide, iron black, carbon black or may be used.

As the other component, a viscosity modifier including, for example, polyvinyl pyrrolidone, polyacrylic acid or a poly saccharide such as a cellulose derivative such as hydroxypropyl cellulose or carboxymethyl cellulose, gur gum, xantan gum or hyaluronan; a surfactant; a water-soluble organic solvent such as ethanol, propanol, isopropanol, ethylene glycol, propylene glycol, 1,3-butylene glycol, diethylene glycol, triethylene glycol or glycerin; and a reducing compound such as an anticorrosive agent, an antibacterial and antifungal agent, ascorbic acid, kojic acid or a polyphenol such as hydroquinone, resorcin, catechol, pyrogallol, tannic acid or gallic acid may be used.

When a pigment is used as a colorant, a dispersant may be used for dispersing the pigment stably, such as a water-soluble resin a styrene acrylaric salt or a styrene maleic salt, another water-soluble resin or an anionic or nonionic surfactant.

Regarding the direct liquid-writing instrument according to the present invention, since the part contacting with a water-ink (preferably an ink-retaining part in a bellows-like shape) is made of a resin composition containing the above components (A) and (B), and further if needed, the component (C) and the like, adequate wettability can be achieved. Consequently, in this instance, it never happens that wettability becomes excessively high and the supply of ink becomes poor as is the case for an ink-contacting part made of sole component(A), or by contrast wettability becomes excessively low and ink leakage is caused as is the case for an ink-contacting part made of sole component(B).

The part contacting with a water-ink may be formed preferably into an ink collector, a bellows-like shape, an accordion shape or a retainer having a row of baffle plates closely arranged. It works to regulate the ink flow into the pen tip to prevent too much an amount of flow and too small an amount of flow.

The direct liquid-writing instrument according to the present invention is applicable to ballpoint pens, fountain pens, and the like using water-ink, currently available in the market.

### Examples

Examples of the present invention given below are for carrying out the present invention, although Examples provided here should not be construed as limiting the invention.

### Examples and Comparative Examples

The components shown in Table 1 were mixed in a V-shape tumbler for Examples and Comparative Examples, respectively, and were then melt-kneaded in a twin screw extruder (230°C of cylinder temperature, TEX 30, manufactured by The Japan Steel Works Ltd.), thus obtaining the pellets of the respective resin compositions.

Next, using an injection molding machine (240°C of cylinder temperature and 60°C of mold temperature), the ink-retaining part 1 in a bellows-like shape shown in Fig. 1 was molded by injection molding. Thus prepared ink-retaining part 1 in a bellows-like shape was attached to the ballpoint pen 10 having the structure of Fig. 2. A heat-cycle test was conducted under the following condition to evaluate the presence/absence of ink leakage from the pen-tip. The used water-ink cotained 80% by mass of water, 19.9% by mass of a dye and 0.1% by mass of a nonionic surfactant, having a viscosity at 25°C of 2.1 mPa·s, a surface tension of 40.2 dyn/cm and a pH value of around 7.

### (Heat cycle test condition)

For each example, 200 ballpoint pens were prepared. The single heat cycle was defined as: 20°C (5 min) → temperature drop (30 min) → -10°C (5 min) → temperature rise (90 min) → 60°C (5 min) → temperature drop (10 min) → 20°C: (Total 145 min). After 36 cycles for each ballpoint pen, the number of ballpoint pens which caused ink leakage from the pen-tip was counted. The result showed that the smaller the number of ballpoint pens which caused the ink leakage becomes, the greater wettability of the ink-retaining part in a bellows-like shape becomes.

**Table 1**

| | Example | | | | | Comparative Example | |
|---|---|---|---|---|---|---|---|
| | 1 | 2 | 3 | 4 | 5 | 1 | 2 |
| (A) Polyamide 6 | 30 | 50 | 60 | 70 | 60 | - | - |
| (B) ABS resin | 30 | 20 | 10 | 10 | 20 | 70 | 70 |
| (B) AS resin | 30 | 20 | 20 | 15 | 10 | 30 | 30 |
| (B) Acid-modified ABS resin | 10 | 10 | 10 | 5 | | - | - |
| (C) Polymer having maleimide-based monomer unit | - | - | - | - | 10 | - | - |
| Etching treatment by chromic acid | Not applied | Not applied | Not applied | Not applied | Not applied | Not applied | Applied |
| The number of ballpoint pens causing ink leakage / 200 ballpoint pens | 2 | 0 | 0 | 0 | 0 | 100 | 5 |

After the completion of the heat cycle test, ten pens were arbitrarily sampled from the ballpoint pens described in the respective examples. The sampled ballpoint pens were tested for writing, and all of them wrote well.
Polyamide 6: UBE Nylon 6 1013B, manufactured by Ube Industries, Ltd.
ABS resin: Styrene 45% by mass, Acrylonitrile 15% by mass, Polybutadiene 40% by mass
As resin: Styrene 75% by mass, Acrylonitrile 25% by mass
Maleic anhydride-modified ABS resin: Styrene 42% by mass, Acrylonitrile 16% by mass, Butadiene-based rubber 40% by mass and maleic anhydride 2% by mass
Polymer containing maleimide-based monomer unit: Styrene-N-phenylmaleimide-maleic anhydride copolymer (Styrene 47% by mass, N-phenylmaleimide 51% by mass, Maleic anhydride 2% by mass, Weight average molecular weight: 145,000, Melt flow index at 265°C and 10 kg:2)

## Claims

1. A direct liquid-writing instrument, having an ink-retaining part wherein an ink is retained and a pen-tip, at least a part or surface contacting with a water-ink of the ink-retaining part comprising (A) 20 to 95% by mass of a polyamide-based resin and 80 to 5% by mass of (B) at least one resin selected from the group consisting a styrene-based resin, an olefin-based resin and a polyphenylene ether resin, wherein the part contacting with said water-ink is an ink-retaining part in a bellows-like shape.

2. The writing instrument according to claim 1, further comprising (C) a polymer having a maleimide-based monomer unit.

3. The writing instrument according to claim 1, wherein (B) comprises a styrene-based resin.

4. The writing instrument according to claim 1, wherein (B) comprises a styrene-based resin and a styrene-based copolymer prepared by copolymerizing with a carboxyl group containing unsaturated compound and/or (C) a polymer having a maleimide-based monomer unit.

5. The writing instrument according to any one of claims 1 to 4, wherein the component (A) content is within a range of 45 to 80% by mass, and the component (B) content is within a range of 55 to 20% by mass.

6. Use of a resin composition comprising 20 to 95% by mass of (A) a polyamide-based resin and 80 to 5% by mass of (B) at least one resin selected from a styrene-based resin, an olefin-based resin and a polyphenylene ether resin for a part contacting with a water-ink in a direct liquid-writing instrument, wherein the part contacting with said water-ink is an ink-retaining part in a bellows-like shape.

7. The use according to claim 6 further containing (C) a polymer having a maleimide-based monomer unit.

8. The use according to claim 6, wherein (B) comprises a styrene-based resin.

9. The use according to claim 6, wherein (B) comprises a styrene-based resin and a styrene-based copolymer prepared by copolymerizing with a carboxyl group containing unsaturated compound and/or (C) a polymer having a maleimide-based monomer unit.

10. The use according to any one of claims 6 to 9, wherein the component (A) content is within a range of 45 to 80 % by mass, and the component (B) content is within a range of 55 to 20% by mass.

## Patentansprüche

1. Direktes Flüssigkeitsschreibinstrument mit einem Tinten-Halteteil, worin eine Tinte gespeichert ist, und mit einer Stiftspitze, wobei zumindest ein Teil oder eine Oberfläche mit einer wasserhaltigen Tinte des Tinten-Halteteils in Kontakt kommt, umfassend (A) 20 bis 95 Massenprozent eines Harzes auf Polyamidbasis und 80 bis 5 Massenprozent (B) mindestens eines Harzes, ausgewählt aus der Gruppe, bestehend aus einem Harz auf Styrolbasis, einem Harz auf Olefinbasis und einem Polyphenylenetherharz, wobei das Teil, das mit der wasserhaltigen Tinte in Kontakt kommt, ein Tinten-Halteteil in einer Balg-ähnlichen Form ist.

2. Das Schreibinstrument nach Anspruch 1, ferner umfassend (C) ein Polymer mit einer Monomereinheit auf Maleimidbasis.

3. Das Schreibinstrument nach Anspruch 1, wobei (B) ein Harz auf Styrolbasis umfasst.

4. Das Schreibinstrument nach Anspruch 1, wobei (B) ein Harz auf Styrolbasis und ein Copolymer auf Styrolbasis, das durch Copolymerisation mit einer eine Carboxylgruppe enthaltenden ungesättigten Verbindung hergestellt wurde, und/oder (C) ein Polymer mit einer Monomereinheit auf Maleimidbasis umfasst.

5. Das Schreibinstrument nach einem der Ansprüche 1 bis 4, wobei der Gehalt der Komponente (A) in einem Bereich von 45 bis 80 Massenprozent und der Gehalt der Komponente (B) in einem Bereichs von 55 bis 20 Massenprozent liegt.

6. Verwendung einer Harzzusammensetzung, umfassend 20 bis 95 Massenprozent von (A) einem Harz auf Polyamidbasis und 80 bis 5 Massenprozent von (B) mindestens einem Harz, ausgewählt aus einem Harz auf Styrolbasis, einem Harz auf Olefinbasis und einem Polyphenylenetherharz, für ein Teil, das mit einer wasserhaltigen Tinte in einem direkten Flüssigkeitsschreibinstrument in Kontakt kommt, wobei das Teil, das mit der wasserhaltigen Tinte in Kontakt kommt, ein Tinten-Halteteil in einer Balg-ähnlichen Form ist.

7. Die Verwendung nach Anspruch 6, ferner enthaltend (C) ein Polymer mit einer Monomereinheit auf Maleimidbasis.

8. Die Verwendung nach Anspruch 6, wobei (B) ein Harz auf Styrolbasis umfasst.

9. Die Verwendung nach Anspruch 6, wobei (B) ein Harz auf Styrolbasis und ein Copolymer auf Styrolbasis, das durch Copolymerisation mit einer eine Carboxylgruppe enthaltenden ungesättigten Verbindung hergestellt wurde, und/oder (C) ein Polymer mit einer Monomereinheit auf Maleimidbasis umfasst.

10. Die Verwendung nach einem der Ansprüche 6 bis 9, wobei der Gehalt der Komponente (A) in einem Bereich von 45 bis 80 Massenprozent und der Gehalt der Komponente (B) in einem Bereichs von 55 bis 20 Massenprozent liegt.

## Revendications

1. Instrument d'écriture liquide directe, ayant une partie retenant l'encre dans laquelle une encre est retenue et une pointe de stylo, au moins une partie ou surface en contact avec une encre aqueuse de la partie retenant l'encre comprenant (A) de 20 à 95 % en masse d'une résine à base de polyamide et de 80 à 5 % en masse de (B) au moins une résine choisie dans le groupe constitué par une résine à base de styrène, une résine à base d'oléfine et une résine de polyphénylène-éther, où la partie en contact avec ladite encre aqueuse est une partie retenant l'encre en forme de soufflet.

2. Instrument d'écriture selon la revendication 1, comprenant en outre (C) un polymère ayant un motif monomère à base de maléimide.

3. Instrument d'écriture selon la revendication 1, dans lequel (B) comprend une résine à base de styrène.

4. Instrument d'écriture selon la revendication 1, dans lequel (B) comprend une résine à base de styrène et un copolymère à base de styrène préparé par copolymérisation avec un composé insaturé contenant un groupe carboxyle et/ou (C) un polymère ayant un motif monomère à base de maléimide.

5. Instrument d'écriture selon l'une quelconque des revendications 1 à 4, dans lequel la teneur en composant (A) est comprise entre 45 et 80 % en masse, et la teneur en composant (B) est comprise entre 55 et 20 % en masse.

6. Utilisation d'une composition de résine comprenant de 20 à 95 % en masse de (A) une résine à base de polyamide et de 80 à 5 % en masse de (B) au moins une résine choisie parmi une résine à base de styrène, une résine à base d'oléfine et une résine de polyphénylène-éther pour une partie en contact avec une encre aqueuse dans un instrument d'écriture liquide directe, où la partie en contact avec ladite encre aqueuse est une partie retenant l'encre en forme de soufflet.

7. Utilisation selon la revendication 6 contenant en outre (C) un polymère ayant un motif monomère à base de maléimide.

8. Utilisation selon la revendication 6, dans laquelle (B) comprend une résine à base de styrène.

9. Utilisation selon la revendication 6, dans laquelle (B) comprend une résine à base de styrène et un copolymère à base de styrène préparé par copolymérisation avec un composé insaturé contenant un groupe carboxyle et/ou (C) un polymère ayant un motif monomère à base de maléimide.

10. Utilisation selon l'une quelconque des revendications 6 à 9, dans laquelle la teneur en composant (A) est comprise entre 45 et 80 % en masse, et la teneur en composant (B) est comprise entre 55 et 20 % en masse.
